# EUROPÄISCHE PATENTSCHRIFT

(11) **EP 0 642 828 B1**
(45) Veröffentlichungstag und Bekanntmachung des Hinweises auf die Patenterteilung: **20.05.1998**
(21) Anmeldenummer: 94113359.7
(22) Anmeldetag: 26.08.1994
(51) Int. Cl.: B01L 3/00

(54) **Reaktionsbehälteranordnung für eine Vorrichtung zur automatischen Durchführung von Temperaturzyklen**
Array of reaction vessels for a device for automatically carrying out temperature cycling
Ensemble de cuves de réaction pour un dispositif destiné à la réalisation automatique de cycles de température

(30) Priorität: 10.09.1993 CH 2718/93
(43) Veröffentlichungstag der Anmeldung: 15.03.1995
(73) Patentinhaber: F. HOFFMANN-LA ROCHE AG, 4002 Basel (CH)
(72) Erfinder: Fassbind, Walter, CH-6340 Baar (CH); Japichino, Emanuele, Ch-5643 SIns (CH)
(74) Vertreter: AMMANN PATENTANWAELTE AG BERN

(56) Entgegenhaltungen:
- EP-A- 0 100 663
- EP-A- 0 369 840
- EP-A- 0 415 307
- EP-A- 0 488 769
- EP-A- 0 542 319
- WO-A-91/18551
- US-A- 3 713 771

## Beschreibung

Die Erfindung betrifft eine wegwerfbare Anordnung von Reaktionsbehältern gleicher Form und Abmessungen zur Durchführung von Temperaturzyklen eines in den Reaktionsbehältern enthaltenen, flüssigen Gemisches, wobei jeder Reaktionsbehälter einen ersten, kegelförmig geformten Wandbereich und einen zweiten, zylindrisch geformten Wandbereich hat, der an einem Ende die Oeffnung des Reaktionsbehälters bildet, wobei die Wandstärke des ersten Wandbereichs kleiner als die Wandstärke des zweiten Wandbereichs ist, und wobei die Oeffnung des Reaktionsbehälters einen Verschluss aufnehmen kann, der dazu geeignet ist, den Reaktionsbehälter gasdicht zu schliessen, wenn er auf der Oeffnung des Reaktionsbehälters aufgesetzt wird.

Die Erfindung betrifft insbesondere eine Anordnung von Reaktionsbehältern der obenerwähnten Art, die vorzugsweise mit einem sogenannten Thermalcycler zur Durchführung der Polymerase-Kettenreaction ("Polymerase-Chain-Reaction") geeignet ist. Ein Thermalcycler ist eine Vorrichtung zur automatischen Durchführung von Temperaturzyklen.

Reaktionsbehälter der oben erwähnten Art sind in der EP-A- 0 488 769 A2 beschrieben. In dieser bekannten Vorrichtung sind die Reaktionsbehälter matrixartig angeordnet, was die Erzielung einer gleichmässigen Temperatur bei allen Reaktionsbehältern erschwert. Ausserdem ist das Handling der Reaktionsbehälter relativ aufwendig, weil die Reaktionsbehälter nach Durchführung der Polymerase-Kettenreaction einzeln manuell geöffnet werden müssen, um die Reaktionsprodukte aus den Reaktionsbehältern zu entnehmen.

Die in der EP-A 0 488 769 A2 beschriebenen Reaktionsbehälter sind daher nicht dazu geeignet, in einem modernen automatischen Analysengerät verwendet zu werden, bei dem eine volle Automatisierung des Handlings der Reaktionsbehälter und der damit verbundenen Pipettierungen von Flüssigkeiten aus den Reaktionsbehältern erwünscht sind.

Der Erfindung liegt daher die Aufgabe zugrunde eine Anordnung von Reaktionsbehältern der eingangs erwähnten Art zur Verfügung zu stellen, mit der die oben erwähnten Ziele erreicht werden können.

Erfindungsgemäss wird diese Aufgabe mit einer Anordnung von Reaktionsbehältern der eingangs genannten Art gelöst, die dadurch gekennzeichnet ist, dass sie sich aus folgenden Teilen zusammensetzt:
einen ersten Teil, der in einem Stück aus einem Kunststoff hergestellt wird und der eine Anordnung von Reaktionsbehältern umfasst, welche Anordnung einen Ring oder ein Segment eines Ringes bildet, wobei benachbarte Reaktionsbehälter durch einen flexiblen Steg verbunden sind, und
einen zweiten Teil, der eine in einem Stück aus demselben Kunststoff hergestellten Anordnung von Verschlüssen umfasst, welche Anordnung einen Ring oder ein Segment eines Ringes bildet, bei welcher Anordnung von Verschlüssen benachbarte Verschlüsse durch wenigstens einen flexiblen Steg verbunden sind und jeder Verschluss mit einer Pipettiernadel durchstechbar ist und dazu geeignet ist, einen der Reaktionsbehälter gasdicht zu schliessen, wenn er auf dessen Oeffnung aufgesetzt wird.

Die wesentlichen Vorteile der erfindungsgemässen Anordnung von Reaktionsbehältern liegen darin, einerseits, dass sie eine sehr homogene Temperaturverteilung in der ganzen Anordnung ermöglicht, so dass zu jedem Zeitpunkt, die Temperatur in allen Reaktionsbehälter der Anordnung gleich ist, andererseits, dass sie eine vollautomatische Pipettierung der Inhalte der Reaktionsbehälter ermöglicht, so dass sie dazu geeignet ist, in einem modernen automatischen Analysengerät verwendet zu werden.

### Beschreibung eines Ausführungsbeispiels

Ein Ausführungsbeispiel der Erfindung wird im folgenden anhand der beiliegenden Zeichnungen beschrieben. Es zeigen:
- Fig. 1: eine perspektivische Explosionsdarstellung der Einzelteile 92 bzw. 95 einer ersten Ausführungsform einer erfindungsgemässen Reaktionsbehälteranordnung 23, die in einem Thermalcycler einsetzbar ist,
- Fig. 2: die Einzelteile 92 bzw. 95 gemäss Fig. 1 zusammengeführt und mit den Reaktionsbehältern der dadurch gebildeten Reaktionsbehälteranordnung 23 im offenen Zustand,
- Fig. 3: die Einzelteile 92 bzw. 95 gemäss Fig. 1 zusammengeführt und mit den Reaktionsbehältern der dadurch gebildeten Reaktionsbehälteranordnung 23 im geschlossenen Zustand,
- Fig. 4: einen Schnitt eines Reaktionsbehälters 21 in Fig. 2 mit offenen Deckel 87,
- Fig. 5: einen Schnitt eines Reaktionsbehälters 21 in Fig. 2 mit geschlossenen Deckel 87,
- Fig. 6: eine perpektivische Darstellung einer zweiten Ausführungsform einer erfindungsgemässen Reaktionsbehälteranordnung,
- Fig. 7: einen aus einem Analysengerät herausgenommenen Thermalcycler-Teil 2, der Thermalcycler 18 und 19 enthält, wobei der Thermalcycler 18 geöffnet und einen daraus entnommenen Reaktionsbehälterring 23 gezeigt wird,
- Fig. 8: einen Schnitt durch die Linie VIII- VIII in Fig. 7, wobei der Thermalcycler 18 geschlossen ist,
- Fig. 9: eine perspektivische Ansicht des Thermalcyclers 18 gemäss Fig. 7, welcher durch eine Aushebevorrichtung 53 ergänzt ist,
- Fig. 10: einen gegenüber Fig. 8 vergrösserten Schnitt durch den Thermalcycler im geschlossenen Zustand,
- Fig. 11: einen Querschnitt des Thermalcyclers gemäss Fig. 9 im geöffneten Zustand,
- Fig. 12: eine schematische Darstellung einer "Master-Slave"-Steuerung zur Regelung und Ueberwachung der Betriebsparameter eines Thermalcyclers,
- Fig. 13: ein Temperatur-Zeit-Diagramm eines im Master-Prozessor gespeicherten Temperaturverlaufes bzw. die daraus resultierenden Temperaturen des Thermoblocks und der Probe.
- Fig. 14: eine perspektivische Gesamtdarstellung eines Analysengerätes` welches als Bestandteil einen Thermalcycler-Teil 2 beinhaltet.

### Erste Ausführungsform einer erfindungsgemässen Anordnung von Reaktionsbehältern

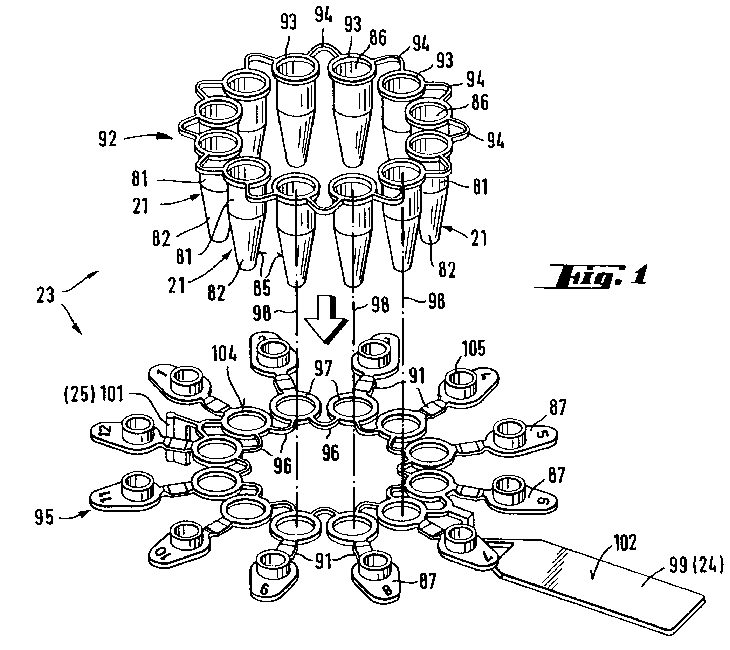

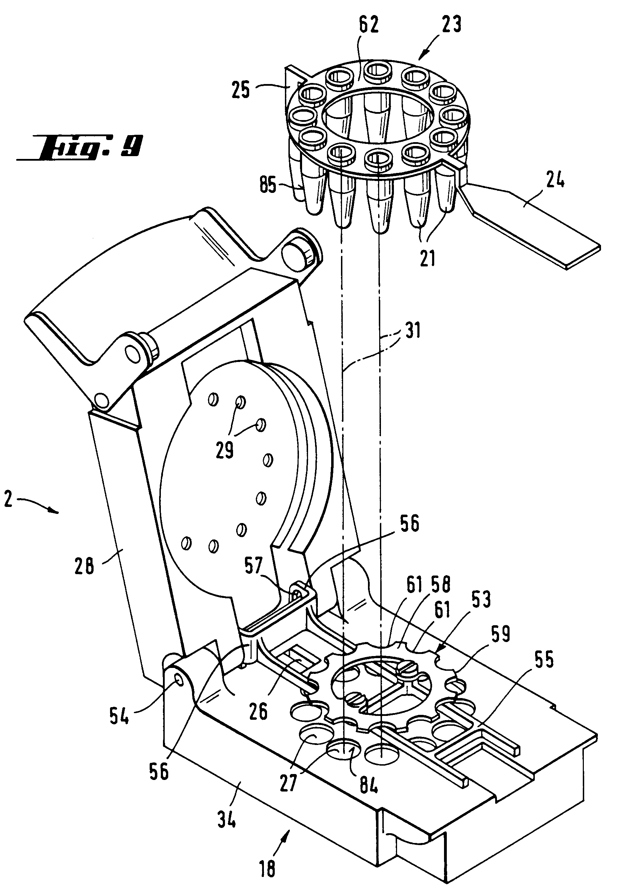

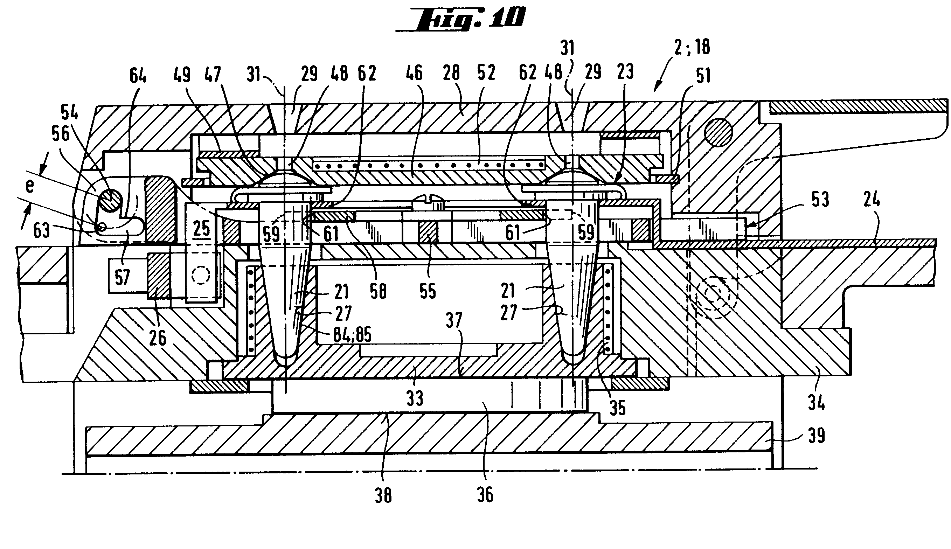

Figuren 1-3 zeigen eine erste Ausführungsform einer erfindungsgemässen Reaktionsbehälteranordnung 23, die in einem Thermalcycler einsetzbar ist. Figuren 4 und 5 zeigen Querschnitte eines der Reaktionsbehälter 21 der Reaktionsbehälteranordnung 23.

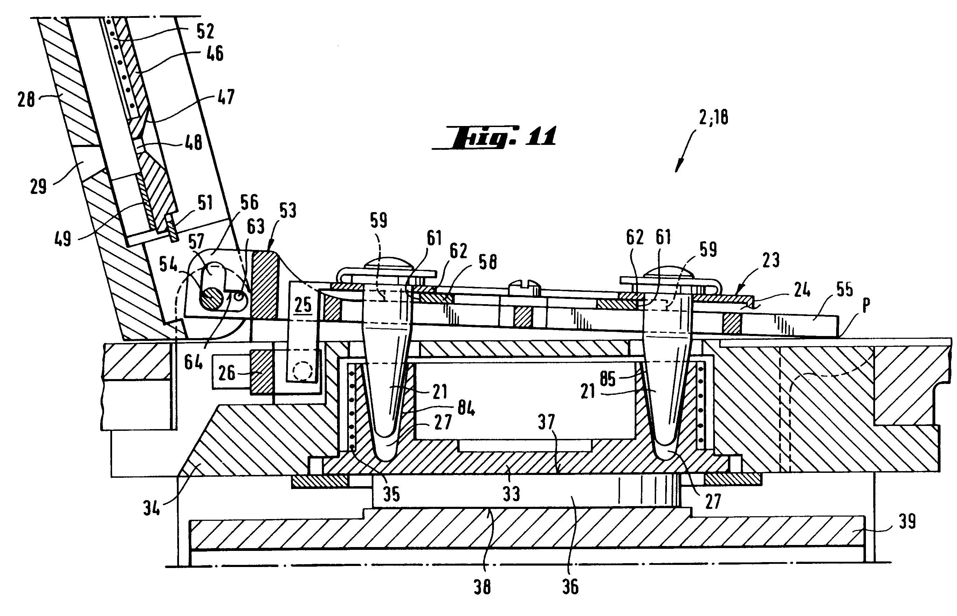

Wie aus den Figuren 1 bis 5 ersichtlich ist, weisen die Reaktionsbehälter 21 einen konischen unteren Bereich 82 und einen zylindrischen oberen Bereich 81 auf. Der konische, untere Bereich 82 des Reaktionsbehälters 21, in welchem sich die thermisch zu behandelnde Probe befindet, ist wegen der besseren Wärmeübertragung mit einer geringeren Wandstärke versehen als der obere, zylindrische Bereich 81. Wie insbesondere aus Fig. 8 erkennbar, ist der untere, konische Bereich 82 des Reaktionsbehälters 21 in eine entsprechend geformte Ausnehmung 27 im Thermoblock 33 des Termalcyclers 18 passgenau einsetzbar, derart, dass die konische Innenwandung der Ausnehmung 27 im Thermoblock 33 mit der konischen Aussenwandung 85 des unteren Bereiches 82 des Reaktionsbehälters 21 in vollen Kontakt kommt und somit einen bestmöglichen Wärmeübergang sicherstellt.

Der Reaktionsbehälter 21 hat eine Oeffnung 86, die mittels eines Deckels 87 dicht verschliessbar ist. Der Deckel 87 ist zum Zwecke einer Entnahme von Probenmaterial mit einer Pipettiernadel 32 durchstechbar.

Um die Wirtschaftlichkeit zu erhöhen und das Handling der Reaktionsbehälter 21 zu erleichtern, sind mehrere, beispielsweise zwölf Reaktionsbehälter, zu einer Einheit, vorzugsweise in kreisförmiger Konfiguration zu einem Reaktionsbehälterring zusammengefasst und die Deckel 87 über ein Filmgelenk 91 unverlierbar angebracht.

In besonders vorteilhafter Weise ist die Reaktionsbehälteranordnung 23 zweiteilig ausgeführt. Das eine Teil 92 besteht aus in gleichen Winkelabständen zueinander angeordneten Reaktionsbehälter 21, welche an den flanschartigen, öffnungsseitigen Durchmesservergrösserungen 93 mittel dünner Stege 94 kreisförmig verbunden sind. Um eine radiale Flexiblität des Reaktionsbehälterringes 92 zu erreichen, was beim Zusammenführen mit dem anderen Teil 95 von Vorteil ist, sind die Stege 94 V-förmig gestaltet. Das Teil 92 wird vorzugsweise aus Polypropylen (PP) hergestellt.

Das andere Teil 95 der Reaktionsbehalteranordnung 23 weist kreisförmig angeordnete, durch Stege 96 miteinander verbundene Kreisringe 97 auf, dessen Innendurchmesser mit den Aussendurchmessern der zylindrischen Bereiche 81 der Reaktionsbehälter 21 identisch ist, und dessen Mittelpunkte mit den Langsachsen 98 der Reaktionsbehälter 21 fluchten. Die Stege 96 sind zur Erhaltung der radialen Elastizität V-förmig gestaltet. An den Kreisringen 97 sind radial nach aussen weisende Filmgelenke 91 angeformt, welche an ihrem Ende jeweils einen Verschlussdeckel 87 tragen. Das Teil 95 wird vorzugsweise ebenfalls aus Polypropylen (PP) hergestellt.

Um einen halben Teilungswinkel der Kreisringe 97 versetzt, radial nach aussen abragend, diametral gegenüberliegend, sind zwei Fortsätze 99 und 101 an das andere Teil 95 angeformt. Der eine Fortsatz 99 weist eine horizontale Fläche 102 auf, auf welche beispielsweise die Daten über die Proben in den Reaktionsbehältern 21 über einen Barcode aufgebracht sind. Der andere Fortsatz 101 in Form einer vertikal ausgerichteten Fahne wirkt mit einem Detektor 26, z.B. eine Lichtschranke, im Thermalcycler 18 zusammen (siehe Fig. 7). Durch diese Einrichtung ist ein definiertes Einsetzen der Reaktionsbehälteranordnung 23 in den Thermalcycler 2 erzwungen.

Zur besseren Uebersicht für den Operator kann die Probenummer auf den Deckellaschen des Proberörchens angebracht sein.

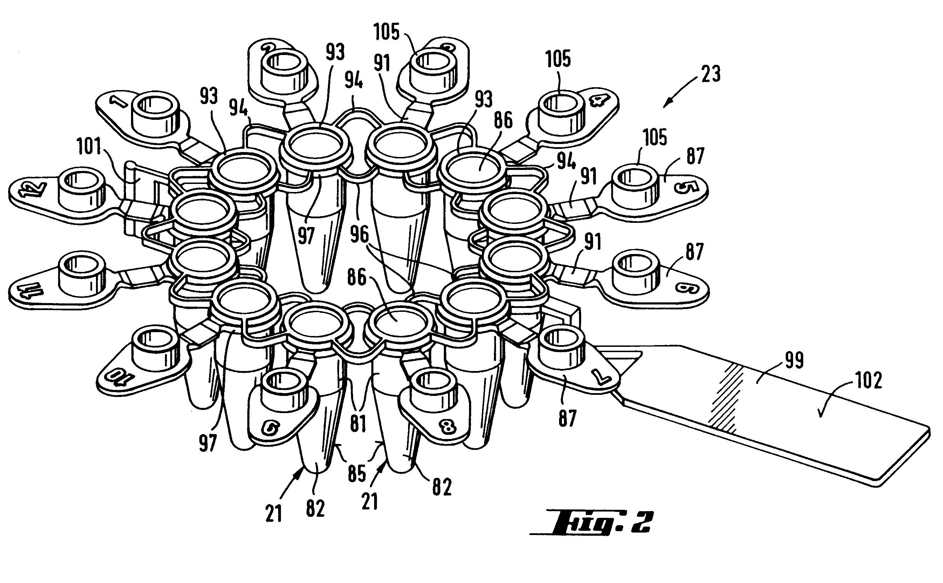

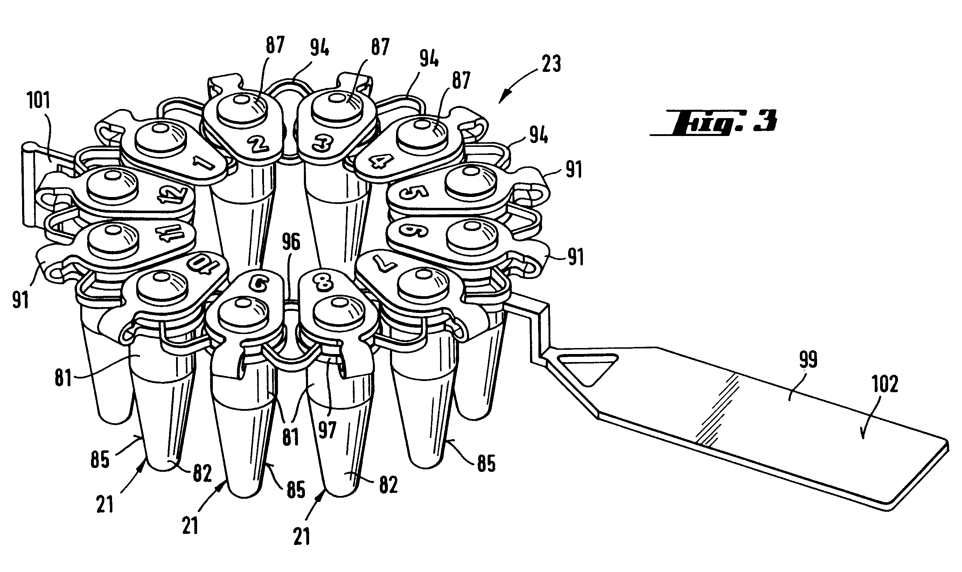

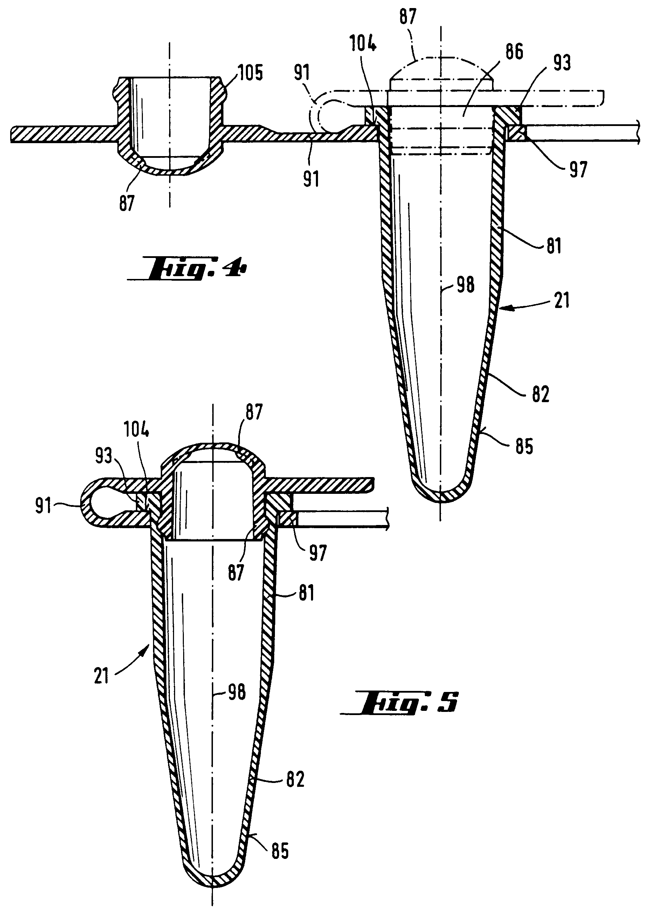

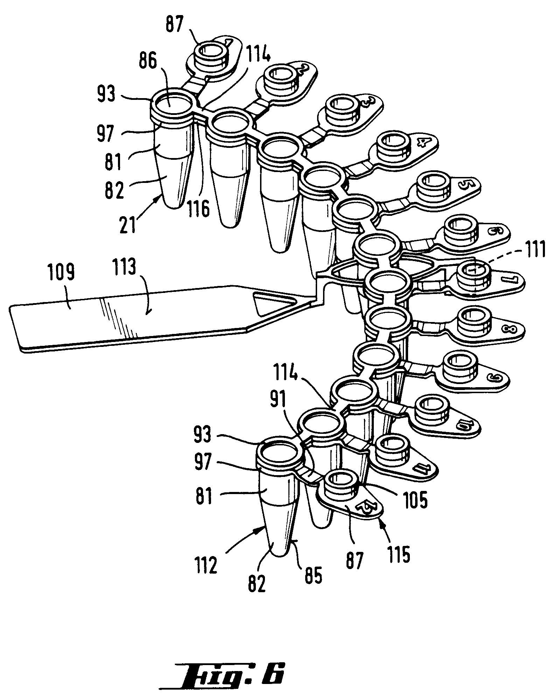

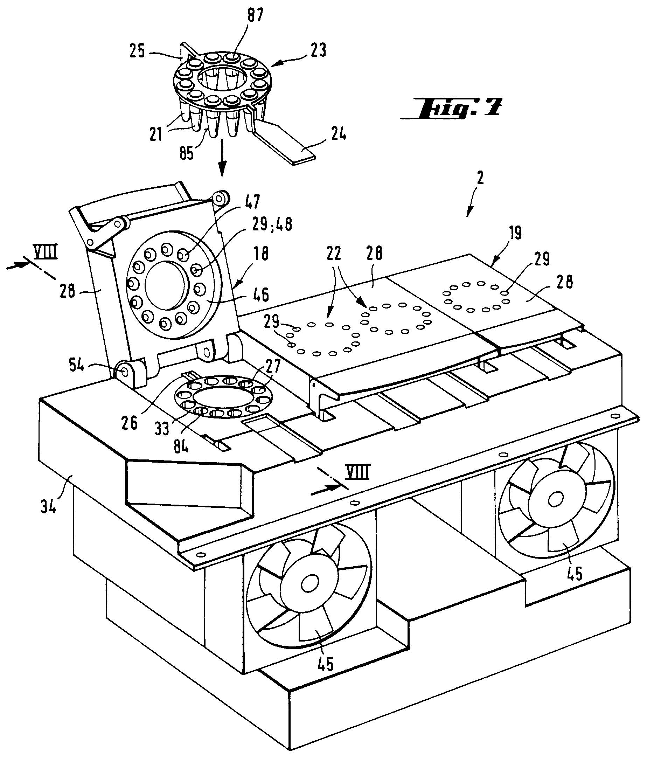

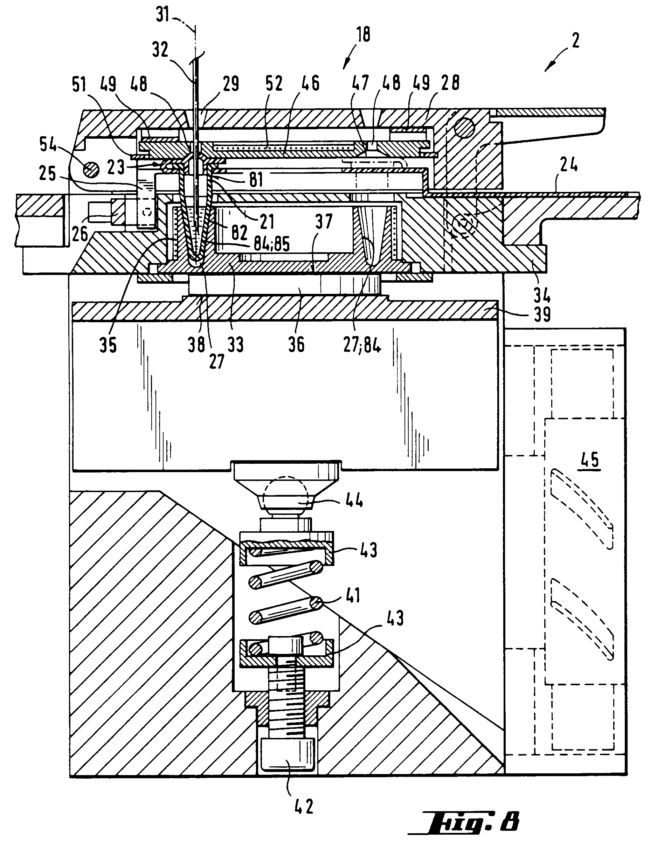

Beim Zusammenführen der beiden Teile 92, 95 der Reaktionsbehälteranordnung 23 (Fig. 2) kommen die Flansche 93 der Reaktionsbehälter 21 des einen Teiles 92 mit der Oberseite 104 der Kreisringe 97 des anderen Teiles 95 in Anlage. Durch die enge Passung zylindrischen Bereich 81/Kreisring 97 ist die Reaktionsbehälteranordnung 23 relativ fest vormontiert und kann mit den entsprechenden Proben befüllt werden. Danach werden die Deckel 87 umgeklappt, und deren zylindrischer Fortsatz 105 wird in der Oeffnung 86 der Reaktionsbehälter 21 dichtend gehalten (Fig. 3).

Die in der oben beschriebene Struktur der Reaktionsbehälteranordnung 23 vorgesehenen Stege 94, 96 verleihen der Reaktionsbehälteranordnung eine derartige Flexibilität, dass die Reaktionsbehälter 21 sehr leicht in den Ausnehmungen 27 des Thermoblocks 33 eingeführt werden können, was bei einer starten Struktur der Reaktionsbehälteranordnung 23 sogar bei geringen Abweichungen der Abmessungen des Thermoblocks bzw. der Reaktionsbehälteranordnung schwierig sein kann.

Durch die zweiteilige Ausführung der Reaktionsbehälteranordnung 23 kann äusserst materialsparend und wenn zweckmässig auch mit Materialien (Kunststoff) unterschiedlicher Eigenschaften, zweckoptimiert gearbeitet werden, was bei Einwegartikeln (die Reaktionsbehälteranordnung wird nach Gebrauch verworfen) von Bedeutung ist.

### Zweite Ausführungsform einer erfindungsgemässen Anordnung von Reaktionsbehältern

Fig. 6 zeigt eine perpektivische Darstellung einer zweiten Ausführungsform einer erfindungsgemässen Reaktionsbehälteranordnung 103. Diese Anordnung setzt sich aus einem ersten Ringsegment 112, das eine Anordnung von Reaktionsbehältern 21 umfasst, und aus einem zweiten Ringsegment 115, das eine Anordnung von Verschlussdeckeln 87 umfasst.

Die Anordnung von Reaktionsbehältern 21 des Ringsegments 112 hat im wesentlichen die gleiche Struktur wie diejenige der Anordnung 92 in Fig. 1 , mit dem einzigen Unterschied, dass die Anordnung von Reaktionsbehältern 21 keinen ganzen Ring bildet. Die Anordnung von Verschlussdeckeln 87 des Ringsegments 115 hat im wesentlichen die gleiche Struktur wie diejenige der Anordnung 95 in Fig. 1 , mit dem einzigen Unterschied, dass die Anordnung von Reaktionsbehältern 21 keinen ganzen Ring bildet.

Um einen halben Teilungswinkel der Kreisringe 97 versetzt, radial nach aussen abragend, diametral gegenüberliegend, sind zwei Fortsätze 109 und 111 an das Teil 115 angeformt. Der eine Fortsatz 109 weist eine horizontale Fläche 113 auf, auf welche beispielsweise die Daten über die Proben in den Reaktionsbehältern 21 über einen Barcode aufgebracht sind. Der andere Fortsatz 111 in Form einer vertikal ausgerichteten Fahne wirkt mit einem Detektor 26, z.B. eine Lichtschranke, im Thermalcycler 18 zusammen (siehe Fig. 7). Durch diese Einrichtung ist ein definiertes Einsetzen der Reaktionsbehälteranordnung 103 in den Thermalcycler 18 erzwungen.

### Thermalcycler

In der nachstehenden Beschreibung wird mit Thermalcycler eine Vorrichtung bezeichnet, die zur automatischen Durchführung von Temperaturzyklen in wenigstens einem mit einem Verschluss geschlossenen Reaktionsbehälter 21 dient, das ein vorbestimmtes Volumen eines flüssigen Reaktionsgemisches enthält.

Nachstehend wird ein Thermalcycler beschrieben, der vorzugsweise als Bestandteil eines automatischen Analysengerätes zur Durchführung der Polymerase-Kettenreaction geeignet ist. Das Analysengerät ist beispielsweise zur Durchführung von Immunoassays ausgelegt.

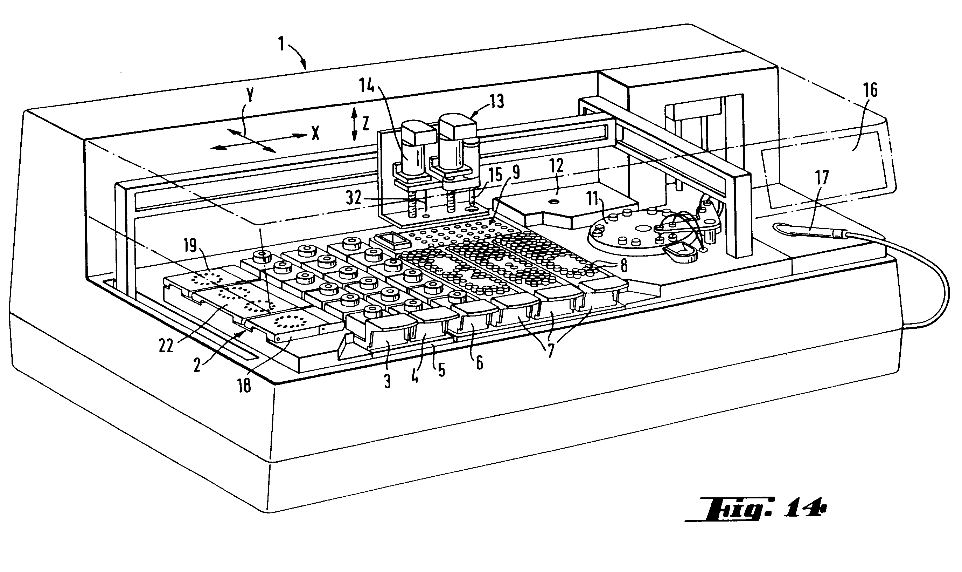

In Fig. 7 ist ein Thermalcycler-Teil 2 aus einem Analysengerät 1 gemäss Fig. 14 ausgebaut dargestellt. Dieser Thermalcycler-Teil 2 enthält z.B. zwei identische Thermalcycler 18, 19 und eine Stand-by Position 22. Die nachstehende Beschreibung des Thermalcycler 18 gilt auch für den Thermalcycler 19.

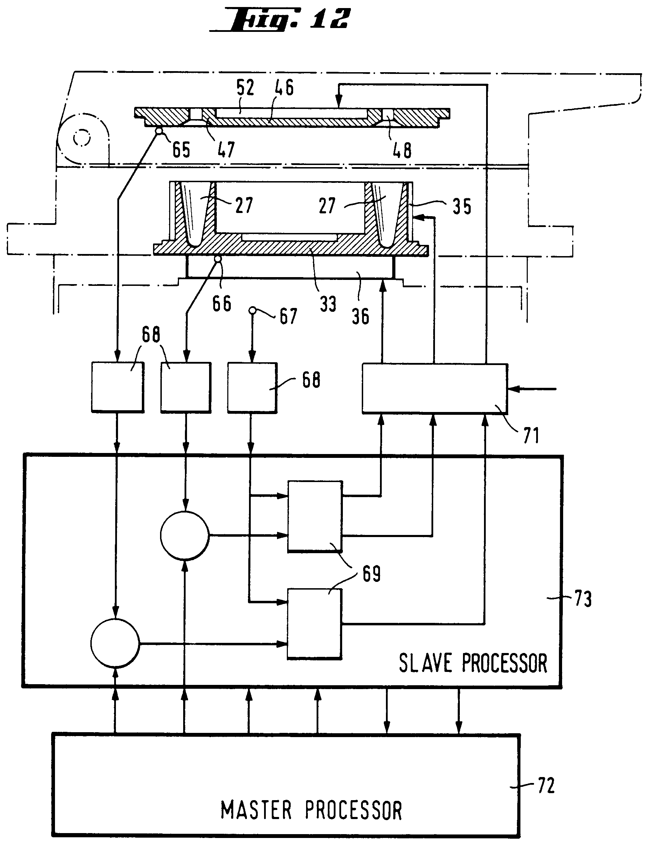

Der Thermalcycler 18 enthält folgende Komponenten:
a) einen Thermoblock 33, der als Träger der Reaktionsbehälter dient, und der eine ringförmige Anordnung von Ausnehmungen 27 hat, wobei jede Ausnehmung als Kammer zur Aufnahme des unteren Teils einer der Reaktionsbehälter 21 dient,
b) eine in Fig. 12 dargestellte computergesteuerte Steuer- und Regeleinrichtung, und
c) durch diese Steuer- und Regeleinrichtung gesteuerte Heiz- bzw. Kühlelemente als Mittel zur zyklischen Aenderung der Temperatur des Thermoblocks 33.

Der Thermoblock 33 ist vorzugsweise ein Körper aus Aluminium oder Silber.

Wie in Figuren 7 und 9 dargestellt, sind z.B. zwölf Reaktionsbehälter 21 zu einem Reaktionsbehälterring 23 zusammengefasst.

Die Reaktionsbehälter 21 sind im unteren Bereich konisch, im oberen Bereich zylindrisch geformt und durch einen Deckel 87 dicht verschlossen.

Wie in Fig. 7 und 9 gut zu erkennen ist, kann eine derartige Reaktionsbehälteranordnung 23 in entsprechende Ausnehmungen 27 des Thermoblocks 33 des Thermalcyclers 18 eingesetzt werden.

### Mittel zur Erkennung einer Markierung der Reaktionsbehälterringes

Der Thermalcycler 18 enthält ferner vorzugsweise Mittel zur Erkennung einer Markierung der Reaktionsbehälteranordnung 23, z.B. eine Markierung in Form einer vertikal ausgerichteten Fahne 25. Die Fahne 25 wirkt mit einer Detektionseinrichtung 26 innerhalb des Thermalcyclers 18 zusammen, um eine Erfassung der Anwesenheit des Reaktionsbehälterringes 23 im Thermalcycler 18 zu ermöglichen. Die Detektionseinrichtung 26 ist z.B. eine Lichtschranke. Die Fahne 25 lässt ausserdem nur eine einzige Positionierung der Reaktionsbehälteranordnung 23 im Thermoblock 33 zu. Eine Kombination dieser einzigen Positionierung mit einer Numerierung der Verschlüsse der Reaktionsbehälter ermöglicht ferner eine eindeutige Probe-Patient-Zuordnung.

Die Reaktionsbehälteranordnung 23 hat ferner eine Lasche 24, die z.B. als Trägerfläche für Daten über die Probeninhalte der Anordnung 23 dient, welche Daten z.B. in Form eines Strichcodes vorhanden sind.

### Zugriff zum Inhalt eines Reaktionsbehälters

Der Thermalcycler 18 hat einen klappbaren Deckel 28, der pro Ausnehmung 27 des Thermoblocks 33 eine Oeffnung 29 aufweist, die ein Durchstechen des Verschlusses 87 des in der Ausnehmung eingesetzten Reaktionsbehälters 21 mit einer Pipettiernadel ermöglicht. Wie aus Fig. 8 ersichtlich, fluchtet bei geschlossener Stellung des Klappdeckels 28 jede der Oeffnungen 29 mit der Längsachse 31 des entsprechenden Reaktionsbehälters 21.

Die Oeffhungen 29 des Klappdeckels 28 ermöglichen den Zugriff zum Inhalt jedes Reaktionsbehälters bei geschlossenem Klappdeckel 28. Dafür wird die Pipettiernadel 32 einer (in Figur 8 nicht dargestellten) Pipettiereinrichtung durch eine der Oeffnungen 29 eingeführt, der Deckel 87 des Reaktionsbehälters 21 mit der Pipettiernadel 32 durchgestochen und anschliessend ein bestimmtes Volumen der im Reaktionsbehälter enthaltenen Flüssigkeit abgesaugt.

### Wärmeübertragung zwischen Thermoblock und Reaktionsbehälter

Es ist aus Fig. 8 ersichtlich, dass die Ausnehmungen 27 im Thermoblock 33 an den konischen Bereich der Reaktionsbehälter 21 angepasst sind, sodass die Umfangswandung des Reaktionsbehälters 21 zuverlässig an die Innenwandung der Ausnehmung 27, zwecks bester Wärmeübertragung, zur Anlage kommen kann. Um die thermische Reaktionsgeschwindigkeit, Präzision und Homogenität zu erhöhen, ist der Thermoblock 33 möglichst wärmeisoliert in einem Gehäuse 34 gehaltert und weist wenig Masse bei guter thermischer Leitfähigkeit auf.

### Heizelement im klappbaren Deckel des Thermalcyclers

Der Deckel 28 enthält vorzugsweise ein Heizelement, z.B. eine elektrische Widerstandsheizung 52, die zum Beheizen der verschlossenen, im Thermoblock 33 angeordneten Reaktionsbehälter dient.

In einer ersten Ausführungsform des Thermalcyclers wird die elektrische Widerstandheizung 52 in Kombination mit einem nachstehend beschriebenen Peltier-Element 36 verwendet, um ein gewünschtes Temperaturprofil (Temperaturverlauf über ein bestimmtes Zeitintervall) im Thermoblock 33 zu erzielen. In dieser Ausführungsform wird das Peltier-Element je nach der zu erreichenden Temperatur innerhalb eines Temperaturprofils als Kühl- oder als Heizelement verwendet.

Die Zusammenwirkung der elektrischen Widerstandheizung 52 mit dem Peltier-Element 36 ermöglicht, die erforderliche Schnelligkeit der Temperaturänderungen des Thermoblocks 33 sowie die erforderliche Präzision und Homogenität der Temperaturverteilung zu erreichen. Durch die Wirkung der Widerstandsheizung 52 wird ausserdem eine etwaige Kondensatbildung im Deckelbereich des Reaktionsbehälters 21 vermieden.

### Verschliess- und Anpresseinrichtung des Klappdeckels des Thermalcyclers

Der Klappdeckel 28 enthält vorzugsweise eine Verschliess- und Anpresseinrichtung zum Festhalten der verschlossenen, im Thermoblock 33 angeordneten Reaktionsbehälter 21. Hierfür weist der Klappdeckel 28 eine federnd gehaltene Andruckplatte 46 auf, welche jeden Reaktionsbehälter 21 mit einer definierten Kraft in die Ausnehmungen 27 des Thermoblocks 33 hineindrückt. Ausnehmungen 47 zur Aufnahme der kalottenförmigen Deckel 87 der Reaktionsbehälter 21 sowie Durchstichöffnungen 48 für die Pipettiernadel 32 sind koaxial zu den Reaktionsbehältern 21 in der Andruckplatte 46 vorgesehen. Als Federelement kann eine Wellscheibe 49 vorgesehen sein. Durch einen Sicherungsring 51 ist die Andruckplatte 46 bei geöffnetem Klappdeckel 28 gegen Herausfallen gesichert.

Die oben erwähnte Widerstandsheizung 52 ist vorzugsweise in der federnden Andruckplatte 46 enthalten.

### Peltier-Element als Kühl- oder Heizelement

Wie in Fig. 8 dargestellt, enthält ein erfindungsgemässe Thermalcycler 18 vorzugsweise wenigstens ein Peltier-Element 36 als Teil der im Thermalcycler 18 vorgesehenen Mittel zur zyklischen Aenderung der Temperatur des Thermoblocks 33. Das Peltier-Element 36 ist mit seiner einen Wärmeübergangsfläche 37 grossflächig mit dem Thermoblock 33 und mit seiner anderen Wärmeübergangsfläche 38 grossflächig an einen Kühlkörper 39 zur Wärmeabfuhr in Kontakt gebracht. Der Kühlkörper 39 ist vorzugsweise aus Aluminium oder Kupfer. Zur Wärmeabfuhr ist ein schaltbarer Ventilator 45 vorgesehen.

Das in Fig. 8 schematisch dargestellte Peltier-Element 36 ist vorzugsweise eine Anordnung solcher Elemente.

In der oben erwähnten ersten Ausführungsform des Thermalcyclers wird das Peltier-Element 36 als Kühl- oder als Heizelement verwendet. Diese Betriebsweise des Peltier-Elementes 36 und seine Zusammenwirkung mit der elektrischen Widerstandheizung 52 ermöglicht, die erforderliche Temperatur des Thermoblocks innerhalb eines Temperaturprofils zu erreichen.

Zur Verlängerung der Lebensdauer des Peltier-Elementes 36 ist dieser vor thermodynamisch begründeten mechanischen Spannungsspitzen vorzugsweise dadurch geschützt, dass das Peltier-Element 36 durch eine zentrale, federvorgespannte Befestigung gegen den Thermoblock 33 gepresst gehalten wird. Hierfür wird das Peltier-Element elastisch zwischen den Wärmeübertragungsflächen des Thermoblocks 33 und des Kühlkörpers 39 eingespannt. Dafür wird der Kühlkörper 39 z.B. mittels einer Druckfeder 41 mit seiner Kontaktfläche gegen das Peltier-Element 36 gedruckt. Die Federspannung kann über eine Einscellschraube 42, Federteller 43 und ein Kugelgelenk 44 eingestellt werden, welches die Freiheitsgrade des Kühlkörpers 39 noch weiter erhöht.

### Zusätzliches Heizelement um den Thermoblock

In einer zweiten Ausführungsform des Thermalcyclers enthält dieser vorzugsweise zusätzlich eine elektrische Widerstandsheizung 35, die auf die zylindrische, äussere Wand des Thermoblocks 33 angeordnet ist. Bei Verwendung dieses zusätzliches Heizelementes im Thermalcycler wird das Peltier-Element 36 nur zum Kühlen verwendet. Dies bringt den Vorteil einer Entlastung des Peltier-Elements von thermisch bedingtem mechanischem Stress und trägt dadurch dazu bei die Lebensdauer des Peltier-Elements im Thermalcycler zu verlängern.

### Aushebevorrichtung

Durch die Temperatur-Aenderungen und der Wirkung der Feder 49 haften die konischen Bereiche der Reaktionsbehälter 21 an den Wänden der Ausnehmungen 27 des Thermoblocks 33. Die dadurch erwirkte kraßschlüssige Verbindung erschwert das Entfernen der Reaktionsbehälter 21 aus dem Thermalcycler 2. Aus diesem Grunde wurde in der Ausführungsform gemäss Fig. 9 bis 11 eine Aushebevorrichtung 53 vorgeschlagen, welche die Entnahme des Reaktionsbehälterringes 23 aus dem Thermoblock 33 erheblich erleichtert.

Wie aus Figuren 9-11 ersichtlich enthält die Aushebevorrichtung 53 eine Wippe 55, die als Auswurfhebel dient. Die Wippe 55 ist an einem Ende mit einem Scharnier des klappbaren Deckels 28 verbunden. Die Wippe 55 ist am anderen Ende frei. Die Aushebevorrichtung 53 enthält ferner eine Auswurfscheibe 58, die mit der Rotationssymmetrieachse des Thermoblocks 33 konzentrisch ist, auf dem die Wippe 55 angeordnet ist. Die Auswurfscheibe 58 hat an der Peripherie eine Anordnung von Ausnehmungen 61, die zur Entnahme des Reaktionsbehälterringes 23 aus den Ausnehmungen 27 des Thermoblocks 33 dienen.

Wie aus Fig. 9 ersichtlich, wird die Wippe 55 auf der Drehachse 54 des Klappdeckels 28 geführt. Drehachsenseitig weist die Wippe 55 zwei Laschen 56 mit Ausnehmungen 57 auf, in welche die Drehachse 54 eingreift. Die Auswurfscheibe ist auf die Wippe 55 aufgeschraubt. Die Auswurfscheibe 58 weist an seinem peripheren Rand 59 halbkreisförmige Ausnehmungen 61 auf, welche projektionsgenau mit den Ausnehmungen 27 im Thermoblock 33, bzw. den zylindrischen Bereichen der Reaktionsbehälter 21 fluchten` welche in die Ausnehmungen 27 eingesetzt sind (Fig. 11). Der periphere Rand 59 der Auswurfscheibe 58 untergreift somit den inneren flanschartigen Bereich 62 des Reaktionsbehälterringes 23 bzw. die Flansche der Reaktionsbehälter 21. Die Gestalt und Funktion der Ausnehmung 57 in den Laschen 56 der Wippe 55 im Zusammenhang mit der Drehachse 54 des Klappdeckels 28 sowie eines am Klappdeckel 28 in einem Abstand e angebrachten Steuerstiftes 63, welcher ebenso in die Ausnehmung 57 eingreift, ist aus Figuren 10 und 11 ersichtlich. Bei geschlossenem Klappdeckel 28 bildet die Aushebevorrichtung 53 eine thermische Abschirmung gegen aussen. Beim öffnen des Klappdeckels 28 gerät der Stift 63 ab einem gewissen Oeffnungswinkel in Kontakt mit einer Steuerfläche 64 der Ausnehmung 57 und bewirkt ein Verschwenken der Wippe 55 um den Punkt P, was ein Ausheben der Probenbehälter 21 zur Folge hat. Durch die Kippbewegung der Wippe 55 um den Punkt P bzw. durch die zunehmende Schrägstellung der Auswurfscheibe 58 wird bewirkt, dass sich die den einzelnen Reaktionsbehältern 21 zugeordneten Losbrechkräfte zeitlich versetzt manifestieren, so dass die Reaktionsbehälter 21 nach und nach aus ihren Ausnehmungen 27 gelöst werden. Der Kraftaufwand und die Materialbeanspruchung wird dadurch auf niedrigem Niveau gehalten und der Bedienungskomfort erhöht.

### Steuerung und Regelung des Thermalcyclers

Eine Steuer- und Regeleinrichtung eines Thermalcyclers 18 über Master-Slave-Prozessoren 72, 73 ist in Fig. 12 schematisch dargestellt.

Die Temperatur der Andruckplatte 46 des Klappdeckels 28, des Thermoblocks 33 und der Umgebung wird mittels Temperaturfühler 65, 66, 67 erfasst und über ein Temperatur-Interface 68 dem Slave-Prozessor 73 zugeführt. Im Master-Prozessor 72 (Schnittstelle zum Benutzer) werden die Temperatursollwerte, die Zeitsollwerte, die Anzahl der Temperaturzyklen und die Geschwindigkeit der Heiz- und Kühlvorgänge eingegeben.

Es können bereits vorbestimmte, gespeicherte Temperatur/Zeitprofile gewählt und abgefahren werden. Die Eingabe erfolgt über die Tastatur 16 oder eine andere Schnittstelle, Diese Daten werden dem Slave-Prozessor 73 zugeführt, welcher über Regler 69 einen Leistungssteller 71 ansteuert, welcher wiederum die Energieversorgung der Heizelemente 35, 52 und des Peltier-Elements 36 regelt. Die Rückmeldungen (Ist-Werte) werden über den Slave-Prozessor 73 dem Master-Prozessor 72 zugeführt und dort verarbeitet bzw. dem Benutzer angezeigt. Auf diese weise wird der Benutzer über die momentane Probentemperatur, die bereits erreichten Temperaturen mit Zeitangabe und die noch zu erreichenden Temperaturen mit Zeitangabe informiert.

Der Betriebszustand des Systems wird ständig überwacht und protokolliert. Fehler, die nicht vom System selbst behoben werden können, bewirken eine automatische Abschaltung oder Fehlermeldung.

Die Temperatur der Probe wird aus der Temperatur des Thermoblocks 33 rechnerisch ermittelt. Dazu wird die Uebertragungsfunktion vom Probenraum zur Probe im Reaktionsbehälter 21 bestimmt. Diese Funktion ist im wesentlichen ein Tiefpass mit Totzeit.

Anhand geeigneter Regelalgorythmen (abgetastete Systeme) wird jeweils die Stellgrösse berechnet, die nötig ist, um die Temperatur der Probe der vorgegebenen Sollwerttemperatur nachzuführen. Diese Berechnungen werden mit einem Signalprozessor durchgeführt. Die berechnete Stellgrösse wird in Form einer Pulsweite dem Leistungssteller 71 zugeführt. Der Leistungssteller 71 ist z.B. ein Leistungs-FET mit einer dazu passenden Schutz- und Entstörschaltung.

Die oben beschriebene Steuerung und Regelung ermöglicht den Einsatz des Thermalcyclers um Proben in einem im Thermalcyclers eingesetzten Reaktionsbehälterring nach bestimmten Temperaturprofilen zu heizen und zu kühlen. Die Temperaturprofile sind definiert durch Plateau-Temperaturen definierter Dauer, und der Gradient, der die Zeit definiert, bei der eine Plateau-Temperatur erreicht sein muss. Bedingung ist, dass alle Proben im Thermalcycler zur gleichen Zeit die gleichen Temperaturen haben.

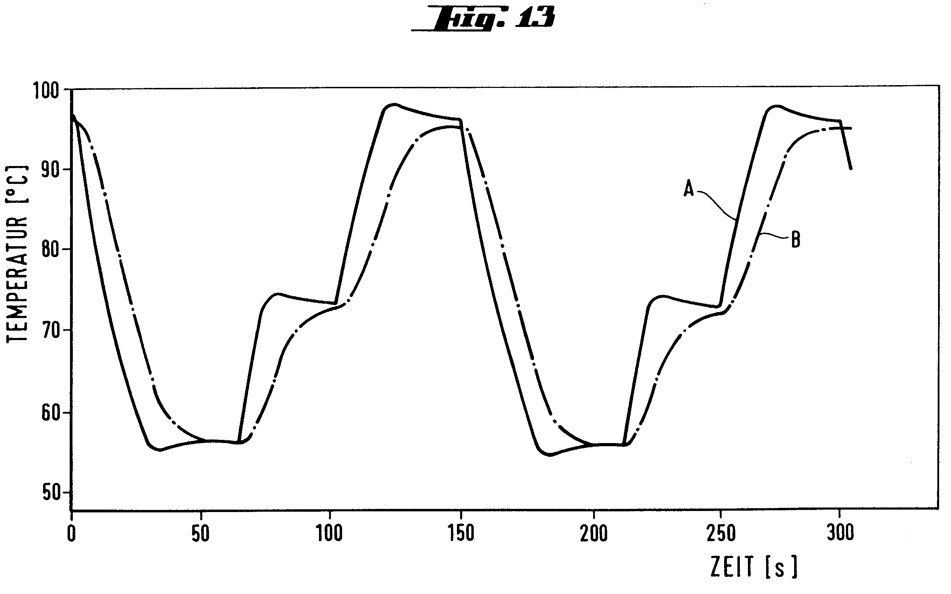

In Fig. 13 sind beispielsweise Temperaturverläufe aus einem Zyklusprozess aufgezeigt. Kurve A zeigt den Temperaturverlauf am Thermoblock 33, die Kurve B zeigt den Temperaturverlauf im Reaktionsbehälter 21. Mit dem Thermalcycler können Temperaturen zwischen 40 und 98 Grad Celsius eingestellt werden. Typischerweise liegen die untere Temperaturen zwischen 50 und 60 Grad Celsius und die oberen Temperaturen zwischen 90 und 96 Grad Celsius. Wenn die mittlere Temperatur benutzt wird, liegt sie um 72 Grad Celsius. Die mit dem Thermalcycler erzielte Heiz-/Kühl-Geschwindigkeit beträgt 1 Grad Celsius pro Sekunde. Ein typisches Zyklus hat eine Dauer von 120 Sekunden. Wenn die entsprechende Temperaturen länger als 10 Sekunden gehalten werden müssen, verlängert sich die Zyklusdauer entsprechend.

### Analysengerät mit Thermalcycler

In Fig. 14 ist ein Analysengerät 1 dargestellt, welches beispielsweise zur Durchführung von Immunoassays ausgelegt ist.

Um die in den Proben enthaltenen, zu analysierenden Substanzen für die nachfolgenden Analyseprozesse im Volumen über die Nachweisgrenze anzuheben, ist im Analysengerät ein Thermalcycler-Teil 2 als integrierter Bestandsteil vorgesehen, der erfindungsgemässe, oben beschriebene Thermalcycler 18 und 19 enthält, mit denen durch Anwendung der Polymerase-Kettenreaktion ein DNS-Amplifikationsverfahren durchführbar ist.

Um die Leistungsfähigkeit des Analysengerätes zu erhöhen, d.h. eine möglichst grosse Anzahl von Proben pro Zeiteinheit zu behandeln, ist die bereitgestellte Probenzahl auf die nachfolgenden Prozesszeiten abzustimmen, derart, dass keine Totzeiten entstehen. Beispielsweise wird dies durch die zwei unabhängig voneinander arbeitenden Thermalcycler 18, 19, welche jeder zwölf Reaktionsbehälter 21 aufnehmen kann, sowie zwei "stand by"-Stationen 22 bewerkstelligt, welche ebenfalls je zwölf Reaktionsbehälter 21 aufnehmen können, die aus einem der Thermalcycler 18, 19 am Ende des dort durchgeführten Verfahrens entnommen werden.

Desweiteren beinhaltet das Analysengerät 1 sämtliche weitere Einrichtungen zur Durchführung obengenanter Immunoassays, z.B. zwei Racks 3, 4 mit Reagenzien auf einem Schütteltisch 5, ein Rack 6 mit weiteren Reagenzien, drei Racks 7 mit Einweg-Reaktionsbehältern 8, einen temperierbaren Inkubator 9, in welchen die Reaktionsbehälter 8 eingesetzt werden, eine Wascheinrichtung 11 und eine Photometereinrichtung 12 zur Festellung des Testergebnisses.

### Transferkopf des Analysengeräts

Der Proben- und Reagenzientransfer sowie der Reaktionsbehältertransfer wird durch einen im x-y- Koordinatensystem bewegbaren Transferkopf 13 ermöglicht, welcher eine Pipettiereinrichtung 14 sowie einen Reaktionsbehältergreifer 15, beide in z-Richtung verfahrbar, aufweist.

Nach der Durchführung der DNS-Amplifikation in den in den Thermalcycler 18, 19 enthaltenen Reaktionsbehältern 21 werden mit der Pipettiereinrichtung 14 Probenvolumina von den Reaktionsbehältern 21 entnommen und in Reaktionsbehälter 8 abgegeben, die in den Racks 7 angeordnet sind. Bei den mit dem Analysengerät durchgeführten Immunoassays werden die in die Reaktionsbehälter 8 abgegebene Probenvolumina untersucht.

### Steuereinheit des Analysengeräts

Sämtliche durchzuführende Operationen sind durch eine zentrale Steuereinheit (nicht dargestellt) des Analysengeräts gesteuert und koordiniert. Eine Bedienoberfläche 16 bzw. Tastatur zur Eingabe von Prozessparametern, sowie eine Anzeige zur Anzeige von Prozesszuständen ist schematisch dargestellt. Die Probendaten, welche beispielsweise mittels Barcode auf den Reaktionsbehältern aufgebracht sind, können über einen manuell geführten Lesegriffel oder Scanner 17 in einen Speicher eingelesen werden. Schnittstellen für einen Printer usw. (nicht dargestellt) sind vorgesehen.

## Patentansprüche

1. Wegwerfbare Anordnung von Reaktionsbehältern (21) gleicher Form und Abmessungen zur Durchführung von Temperaturzyklen eines in den Reaktionsbehältern enthaltenen, flüssigen Gemisches, wobei jeder Reaktionsbehälter einen ersten, kegelförmig geformten Wandbereich (82) und einen zweiten, zylindrisch geformten Wandbereich (81) hat, der an einem Ende die Oeffnung (86) des Reaktionsbehälters bildet, wobei die Wandstärke des ersten Wandbereichs kleiner als die Wandstärke des zweiten Wandbereichs ist, und wobei die Oeffnung des Reaktionsbehälters einen Verschluss (87) aufnehmen kann, der dazu geeignet ist, den Reaktionsbehälter gasdicht zu schliessen, wenn er auf der Oeffnung des Reaktionsbehälters aufgesetzt wird,
welche Anordnung von Reaktionsbehältern dadurch gekennzeichnet ist, dass sie sich aus folgenden Teilen zusammensetzt:
einen ersten Teil (92, 112), der in einem Stück aus einem Kunststoff hergestellt wird und der eine Anordnung von Reaktionsbehältern (21) umfasst, welche Anordnung einen Ring oder ein Segment eines Ringes bildet, wobei benachbarte Reaktionsbehälter (21) durch einen flexiblen Steg (94, 114) verbunden sind, und
einen zweiten Teil (95, 115), der eine in einem Stück aus demselben Kunststoff hergestellten Anordnung von Verschlüssen (87) umfasst, welche Anordnung einen Ring oder ein Segment eines Ringes bildet, bei welcher Anordnung von Verschlüssen benachbarte Verschlüsse (87) durch wenigstens einen flexiblen Steg (96, 116) verbunden sind und jeder Verschluss (87) mit einer Pipettiernadel durchstechbar ist und dazu geeignet ist, einen der Reaktionsbehälter (21) gasdicht zu schliessen, wenn er auf dessen Oeffnung (86) aufgesetzt wird.

2. Anordnung von Reaktionsbehältern gemäss Anspruch 1, dadurch gekennzeichnet, dass die Anordnung von Verschlüssen (87) einen Fortsatz (25, 101, 111) hat, der als Bezugskörper zur eindeutigen Positionierung und/oder zur automatischen Erfassung der Anordnung von Reaktionsbehältern (21) in einer Vorrichtung zur Durchführung von Temperaturzyklen verwendbar ist.

## Claims

1. A throwaway arrangement of reaction containers (21) of the same shape and dimensions for the performance of temperature cycles in a liquid mixture in the reaction containers, each reaction container having a first conical wall region (82) and a second cylindrical wall region (81) which at one end forms the opening (86) of the reaction container, the thickness of the first wall region being less than the thickness of the second wall region, and the opening of the reaction container being adapted to receive a closure (87) for closing the reaction container in a gas-tight manner when placed on the opening of the reaction container,
which arrangement of reaction containers is characterized in that it is made up of the following parts:
a first part (92, 112) made in one piece from a plastic and comprising an arrangement of reaction containers (21), the arrangement forming a ring or a segment of a ring and adjacent reaction containers (21) being joined by a flexible web (94, 114) and
a second part (95, 115) comprising an arrangement of closures (87) made in one piece from the same plastic, the arrangement forming a ring or a segment of a ring and adjacent closures (87) in the arrangement of closures being joined by at least one flexible web (96, 116) and each closure (87) being pierceable by a pipetting needle and being adapted to close one of the reaction containers (21) in a gas-tight manner when placed on the opening (86) thereof.

2. An arrangement of reaction containers according to claim 1, characterized in that the arrangement of closures (87) has an extension (25, 101, 111) which can be used as a reference member for the unambiguous positioning and/or for the automatic detection of the arrangement of reaction containers (21) in a device for the performance of temperature cycles.

## Revendications

1. Ensemble jetable de récipients de réaction (21) de même forme et de mêmes dimensions pour l'exécution de cycles de température d'un mélange liquide que contiennent les récipients de réaction, chaque récipient de réaction comprenant une première zone de paroi (82) de forme conique et une deuxième zone de paroi (81) de forme cylindrique, qui forme à une extrémité l'orifice (86) du récipient de réaction, l'épaisseur de paroi de la première zone de paroi étant inférieure à l'épaisseur de paroi de la deuxième zone de paroi et l'orifice du récipient de réaction pouvant loger un obturateur (87) qui convient à fermer le récipient de réaction hermétiquement aux gaz lorsqu'il est posé sur l'orifice du récipient de réaction.
ledit ensemble de récipients de réaction étant caractérisé en ce qu'il se compose des parties suivantes :
une première partie (92, 112) qui est réalisée en une pièce de matière plastique et qui comprend un ensemble de récipients de réaction (21), ledit ensemble formant un anneau ou un segment d'un anneau, les récipients voisins de réaction (21) étant reliés par une entretoise souple (94, 194) et
une deuxième partie (95, 115) qui comprend un ensemble d'obturateurs (87) réalisé en une pièce en la même matière plastique, ledit ensemble formant un anneau ou un segment d'un anneau, dans lequel ensemble d'obturateurs les obturateurs voisins (87) sont reliés par au moins une entretoise souple (96, 116) et chaque obturateur (87) pouvant être percé par une aiguille de pipette et convenant à fermer hermétiquement aux gaz un des récipients de réaction (21) lorsqu'il est posé sur son orifice (86).

2. Ensemble de récipients de réaction selon la revendication 1, caractérisé en ce que l'ensemble d'obturateurs (87) comprend un prolongement (25, 101, 111) qui est utilisable en corps de référence pour le positionnement précis et/ou pour la prise automatique de l'ensemble de récipients de réaction (21) dans un dispositif d'exécution de cycles de température.
